Europäisches Patentamt

European Patent Office

Office européen des brevets

(19)

(11) Veröffentlichungsnummer: **0 1 1 4 269**
**B1**

(12) **EUROPÄISCHE PATENTSCHRIFT**

(45) Veröffentlichungstag der Patentschrift:
02.04.86

(51) Int. Cl.⁴: **F 16 L 59/02**, F 16 L 59/16

(21) Anmeldenummer: **83112211.4**

(22) Anmeldetag: **05.12.83**

(54) **Heissfluidrohrleitung und Modul zu ihrem Aufbau.**

(30) Priorität: **17.12.82 DE 3246871**

(43) Veröffentlichungstag der Anmeldung:
**01.08.84 Patentblatt 84/31**

(45) Bekanntmachung des Hinweises auf die Patenterteilung:
**02.04.86 Patentblatt 86/14**

(84) Benannte Vertragsstaaten:
**CH DE FR IT LI**

(56) Entgegenhaltungen:
**EP - A - 0 044 468**
**AT - B - 361 747**
**CH - A - 434 910**
**US - A - 1 942 989**
**US - A - 3 388 724**

(73) Patentinhaber: **INTERATOM Gesellschaft mit beschränkter Haftung, Friedrich-Ebert-Strasse, D-5060 Bergisch Gladbach 1 (DE)**
Patentinhaber: **ASINEL, Asociacion de Investigacion Industrial Electrica, Francisco Gervás 3, Madrid 20 (ES)**

(72) Erfinder: **Perez, Juan, Reginharstrasse 32, D-5060 Bergisch-Gladbach (DE)**

(74) Vertreter: **Mehl, Ernst, Dipl.-Ing. et al, Postfach 22 01 76, D-8000 München 22 (DE)**

ACTORUM AG

## Beschreibung

Die vorliegende Erfindung betrifft eine Heissfluidrohrleitung nach dem Oberbegriff des ersten Anspruchs, wie sie in einer Reihe von verfahrenstechnischen oder zur Energiegewinnung dienenden Anlagen Verwendung finden kann, insbesondere in einem gasgekühlten Sonnenkraftwerk; dieses kann aus einem auf einem Turn angeordneten Empfänger bestehen, auf den durch eine Vielzahl von Spiegeln Sonnenlicht so konzentriert wird, dass ein durch den Empfänger zirkulierendes Gas (z.B. Luft) auf eine so hohe Temperatur (z.B. 950°C) erhitzt wird, dass dieses Gas zum Antrieb einer Turbine verwendet werden kann, die einen elektrischen Generator antreibt. Die Verwendung der hier dargestellten Erfindung ist jedoch nicht auf diesen Anwendungsfall beschränkt.

Metallische Werkstoffe, die bei den genannten Temperaturen den Einschluss von Drücken gestatten, die für den betrieb einer Anlage der genannten Art gefordert sein können (z.B. 40 bar) stehen nicht zur Verfügung. Der Aufbau solcher bereits früher vorgeschlagenen Rohrleitungen (vergleiche DE-A-2905614) weist daher üblicherweise ein aus einzelnen Schüssen zusammengesetztes, nicht druckdichtes Innenrohr aus einem hochtemperaturbeständigen Werkstoff auf, und ein dieses konzentrisch umgebendes, druckdichtes Aussenrohr, wobei der Abstand der beiden Rohre sowie Art und Menge der den Zwischenraum zwischen den Rohren ausfüllenden Isolierung so gewählt werden, dass die im Innenrohr herrschende hohe Temperatur in der Isolierung so weit herabgesetzt wird, dass das Aussenrohr nur noch einer Temperatur (z.B. 300°C) zu widerstehen braucht, bei der der metallische Werkstoff des Aussenrohres noch eine ausreichende Festigkeit aufweist. Als Werkstoff für das Innenrohr sind in erster Linie Keramiken in Betracht gezogen worden. Diese sind infolge ihrer Sprödigkeit nicht nur bei der Montage bruchgefährdet, sondern verlangen auch besondere Rücksichten hinsichtlich der Geschwindigkeit etwaiger Temperaturänderungen in der Leitung, wie sie beispielsweise beim An- oder Abfahren der Anlage oder bei Störfällen auftreten können. Infolge der unterschiedlichen axialen Ausdehnungskoeffizienten von Innen- und Aussenrohr muss zumindestens in bestimmten Temperaturbereichen mit dem Auftreten von Spalten zwischen den einzelnen Rohrschüssen des Innenrohres gerechnet werden. Faserförmige Isoliermaterialien können durch den Strom des in der Leitung fliessenden, heissen Gases ausgetragen werden, bzw. sind besondere Vorkehrungen erforderlich, um das Vordringen heisser Gassträhnen aus dem Innenrohr durch Fehlstellen in der Isolierung bis an das Aussenrohr zu vermeiden.

Aufgabe der vorliegenden Erfindung ist eine Heissfluidrohrleitung, die eine ausreichende Isolierung zwischen Innen- und Aussenrohr gewährleistet und dabei das Auftreten von Spalten zwischen den einzelnen Schüssen des Innenrohres zuverlässig verhindert. Sie soll ferner in der Lage sein, plötzlichen Temperatur- oder Druckschwankungen in der Rohrleitung zu folgen. Sie soll darüber hinaus aus modularen Einzelteilen bestehen, die unkompliziert zu fertigen sind und nicht durch besondere Befestigungselemente miteinander verbunden werden müssen.

Die Lösung dieser Aufgabe geschieht durch die im kennzeichnenden Teil des ersten Anspruchs angegebenen Mittel. Die einzelnen Module des Innenrohres werden aus metallischen, eine gewisse Elastizität aufweisenden Werkstoffen (deren Auswahl je nach geforderter Temperatur, Korrosionsfestigkeit gegenüber bestimmten Stoffen oder in bezug auf andere Eigenschaften unter Zuhilfenahme des metallurgischen Fachwissens ohne Schwierigkeiten zu treffen ist) gefertigt, die vermöge ihrer Elastizität den Temperaturänderungen zu folgen vermögen, ohne ihren festen Verbund zu lockern. Die unlösbar mit dem Innenrohr verbundene, an sich bekannte Isolierung aus wabenförmigen Zellen sorgt für den Abbau zumindest eines Teils der Temperaturdifferenzen zwischen Innen- und Aussenrohr und dient zugleich zur Versteifung des ersteren, dessen Wandstärken mit Rücksicht auf die geforderte Unempfindlichkeit gegen plötzliche Temperaturänderungen notwendigerweise nur gering sein können. Da der Dehnungsausgleich in axialer Richtung in erster Linie über den biegsamen Flansch erfolgt, kann die wabenförmige Isolierung in dieser Richtung eine erhebliche Steifigkeit aufweisen, während die in radialer Richtung vorzusehende geringere Steifigkeit den Dehnungsausgleich in dieser Richtung erleichtert. Dieses in verschiedenen Richtungen unterschiedliche Verhalten gegenüber Druckbelastungen entspricht darüber hinaus der gewünschten günstigsten Anordnung einer wabenförmigen Isolierung, nämlich mit Waben, die sich hauptsächlich in Richtung der Längsachse der Rohrleitung erstrecken.

Die im zweiten Anspruch vorgeschlagene Abwandlung des Erfindungsgedankens gestattet eine Verkleinerung des Zwischenraumes zwischen Innen- und Aussenrohr, da die für den äusseren Teil des Ringraumes vorgeschlagenen faserförmigen Isoliermaterialien im allgemeinen eine bessere Wärmedämmfähigkeit haben als die wabenförmigen. Sie sind jedoch nicht in der Lage, wie letztere zur Aussteifung des Innenrohres beizutragen. Der Anteil der wabenförmigen Isolierung wird also zu bemessen sein, wie es für die Steifigkeit des Innenrohres erforderlich ist.

Die im dritten Anspruch vorgeschlagenen zusätzlichen, lose zwischen die einzelnen Schüsse eingelegten trennscheiben sorgen dafür, dass etwa aufgrund von axialen Temperaturdifferenzen sich bildende Konvektionsströme in der Isolierung, insbesondere in der wabenförmigen, auf die Länge eines Rohrschusses begrenzt bleiben.

Die im vierten Anspruch vorgeschlagene Ausgestaltung der Erfindung gewährleistet einen Druckausgleich zwischen dem Inneren des Innenrohres und dem Ringraum zwischen Innen- und Aussenrohr auch bei plötzlichen Druckänderungen im ersteren, so dass von dieser Seite her keine Gefahren für die Integrität des Innenrohres bestehen.

Der fünfte Anspruch definiert ein besonders zum
Aufbau des Innenrohres der erfindungsgemässen
Rohrleitung geeignetes Modul, das von einfachem
Aufbau ist und ohne weiteres serienmässig auf bekannten Blechverformungsmaschinen herstellbar
ist, wie sie beispielsweise die Hersteller von Faltenbalgkompensatoren besitzen. Ein Innenrohr
beliebiger Länge lässt sich durch einfaches Ineinanderstecken der einzelnen Module und dieser in
das Aussenrohr herstellen, ohne dass es weiterer
Montagearbeiten bedarf.

Ein Ausführungsbeispiel der Erfindung ist in der
Zeichnung dargestellt, und zwar zeigt

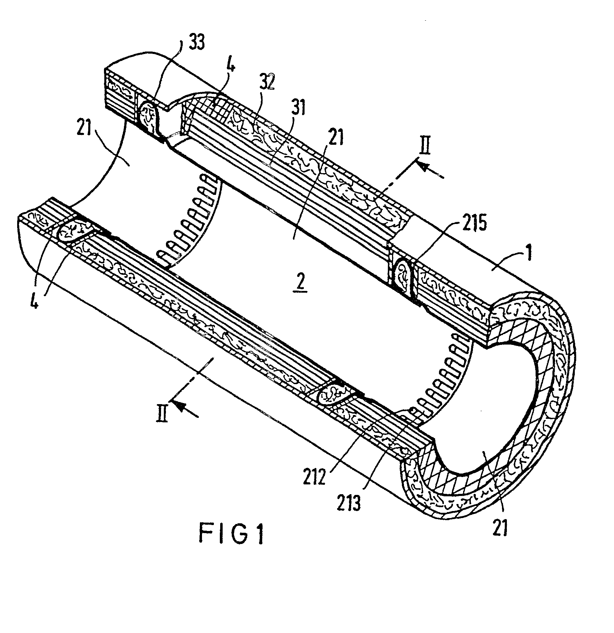

Fig. 1 ein Stück der Heissfluidrohrleitung in aufgeschnittener perspektivischer Darstellung,

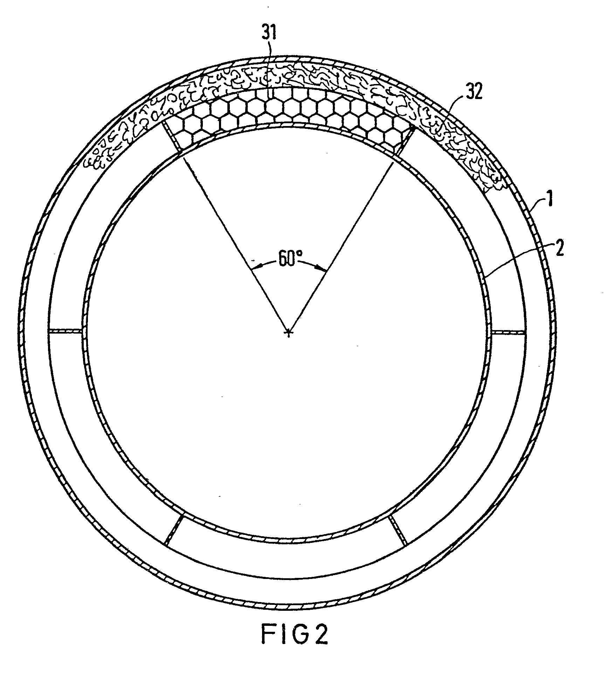

Fig. 2 einen Querschnitt entsprechend der Linie
II-II der Fig. 1,

Fig. 3 in vergrössertem Masstab die Stossstelle
zwischen zwei Modulen im halben Längsaxialschnitt, und

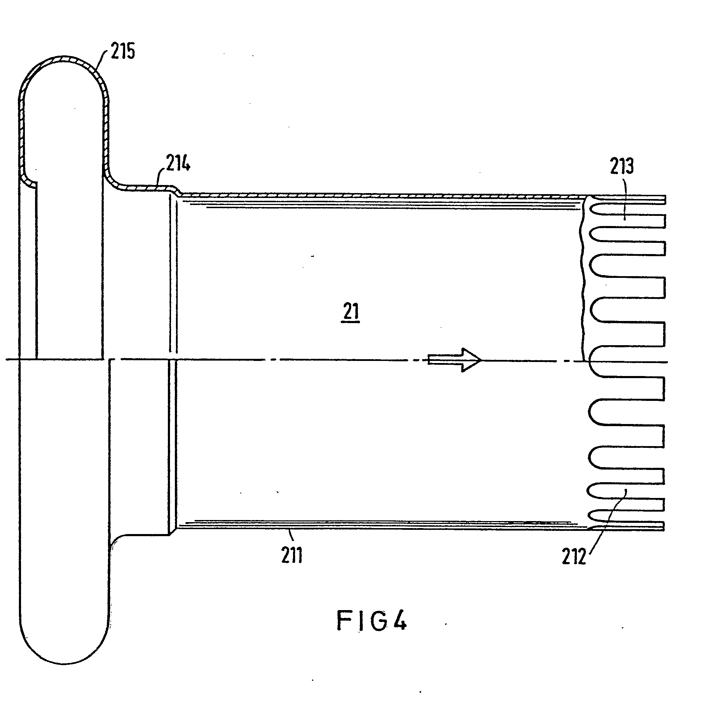

Fig. 4 das Innenrohrmodul selbst, teils im
Längsaxialschnitt, teils in der Ansicht.

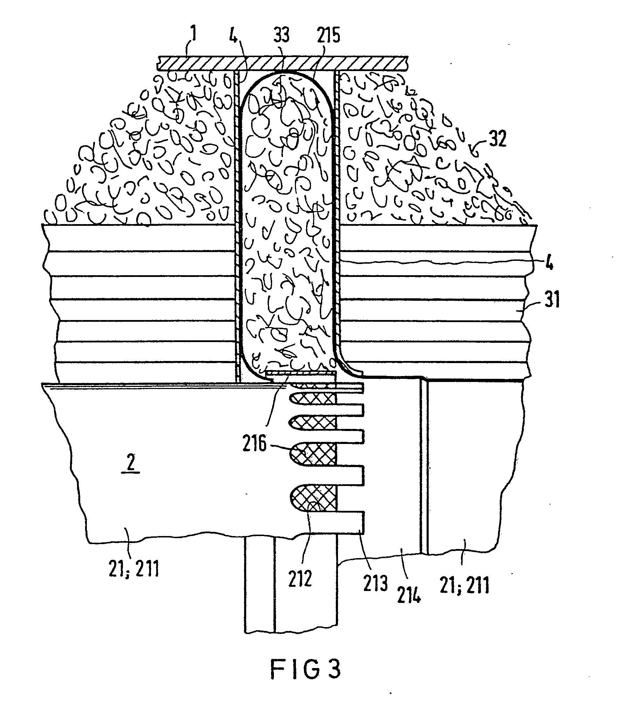

Die erfindungsgemässe Rohrleitung ist aufgebaut aus einem durch Zusammenschweissen einzelner Schüsse in beliebiger Länge gebildeten
Aussenrohr 1 aus einem metallischen Werkstoff,
das festigkeitsmässig in der Lage ist, bei niedrigeren Temperaturen dem in der Rohrleitung herrschenden Druck zu widerstehen. Hierfür geeignete Stähle sind dem Fachmann im Anlagenbau bekannt. Der Strömungsführung dient ein konzentrisch zum Aussenrohr 1 angeordnetes Innenrohr
2, das aus einzelnen, ineinandergesteckten Schüssen oder Modulen 21 aufgebaut ist und aus einem
hochwarmfesten Material, z.B. einer Nickel-Basis-
Legierung hergestellt ist. Das einzelne, mittels einer der bekannten Blechverarbeitungstechniken,
z.B. dem Tiefziehen, geformte Modul besteht aus
einem längeren zylindrischen Teil 211, der mit seinem Innendurchmesser der für die Rohrleitung gewünschten Nennweite entspricht und an seinem
einen Ende mit kammförmigen Ausnehmungen
212 bzw. den dazwischen stehengebliebenen
Zähnen 213 versehen ist. Am anderen Ende des
zylindrischen Teils 211 schliesst ein kürzerer zylindrischer Teil 214 an, der in seinem Innendurchmesser dem Aussendurchmesser des längeren
Teils 211, zuzüglich einer gewissen Toleranz, entspricht. Hieran schliesst ein im Schnitt etwa U-
förmiger, biegsamer Flansch 215 an, der in seinem
Aussendurchmesser dem Innendurchmesser des
Aussenrohres 1, oder auch einem geringen Untermass entspricht. Der Flansch 215 ist sowohl an
seinem freien Ende als auch am Übergang zum
kürzeren Zylinder 214 deutlich abgerundet, um
beim Zusammenstecken der einzelnen Schüsse
das Einführen des mit den Zähnen 213 versehenen
Endes in den Bereich des kürzeren Zylinders 214
zu erleichtern, wie es aus der in Fig. 3 dargestellten Stossstelle zwischen zwei Modulen 21 ersichtlich ist. Dabei wirkt sich die durch das Vorhandensein der Ausnehmungen 212 gegebene radiale Elastizität der Zähne 213 zusätzlich erleichternd aus. Das Mass des Einbringens (hier des linken) Moduls in den kürzeren zylindrischen Bereich 214 des (hier rechten) Nachbarmoduls richtet sich nach der entsprechenden der Temperatur in
der Rohrleitung unterschiedlichen Wärmedehnung der einzelnen Schüsse 21. Eine sichere Führung der Module ineinander ist dabei über einen
weiten Bereich gewährleistet. Zugleich bilden die
Ausnehmungen 212 in dem Bereich, in dem sie
nicht vom kürzeren zylindrischen Teil 214 des
Nachbarmoduls überlappt werden, Öffnungen in
das Innere des Flansches 215, durch die ein
Druckausgleich zwischen dem Zwischenraum
zwischen Aussen- 1 und Innenrohr 2 stattfinden
kann. Dieser Zwischenraum wird ausgefüllt durch
eine Isolierung, die von innen nach aussen aus
zwei unterschiedlichen Schichten aufgebaut ist,
und zwar erstens einer Schicht 31 aus einem wabenförmigen Isoliermaterial aus sehr dünnem,
ebenfalls warmfesten Blech bekannter Bauart, das
in Sektoren von je beispielsweise 60° vorgefertigt
und vor der Montage der Rohrleitung vorzugsweise durch Punktschweissen so auf dem jeweiligen
Modul 21 befestigt wird, dass sie sich zu einer vollständigen Isolierschicht 31 zusammenschliesst.
Die Dicke dieser Schicht 31 sowie die Materialstärken der wabenförmigen Isolierung sind so bemessen, dass die letztere die Module 21 ausreichend aussteift. Bei Zwängungen zwischen den
einzelnen Modulen 21 gibt der biegsame Flansch
215 nach, und die Stege der wabenförmigen Isolierung werden keinen unzulässig hohen Druckbelastungen ausgesetzt. Dagegen geben diese einer
radialen Ausdehnung des Innenrohres 2 im elastischen Bereich nach. Die zweite, konzentrisch anschliessende Isolierschicht 32 besteht aus einer
geeigneten Mineralfaser, z.B. aus einem der dort
auftretenden Temperatur entsprechenden Material (z.B. Aluminiumoxid). Zur Verhinderung des
Austrags von Isolierfaser durch die Ausnehmungen 212 bei plötzlicher Druckabsenkung kann vor
die Öffnungen ein metallisches Sieb 216 gelegt
sein. Beide Isolierschichten zusammen setzen die
im Inneren des Innenrohres herrschende hohe
Temperatur von z.B. 950°C bis auf einen für den
Werkstoff des Aussenrohres 1 noch zulässigen
Wert, z.B. von 300°C, herab. Das Innere des Flansches 215 ist ebenfalls mit einer Isolierung 33 aus
Mineralfasern gefüllt. Das Entstehen von Konvektionsströmungen über die gesamte Länge der
Rohrleitung wird durch ringförmige Trennscheiben 4 (z.B. aus $Al_2O_3$) unterbunden, die zwischen
die einzelnen Module 21 bzw. zwischen die Isolierschichten 31, 32 und den Flansch 215 eingelegt werden und die auch eine bedeutende Hilfe
bei der Montage der Rohrleitung, insbesondere
beim Stopfen der Isolierung, darstellen.

## Patentansprüche

1. Heissfluidrohrleitung mit einem äusseren,
druckeinschliessenden und einem inneren, strömungsführenden Rohr (1 bzw. 2) sowie den Zwischenraum zwischen beiden ausfüllendem Isoliermaterial (31, 32, 33), dadurch gekennzeichnet, dass das Innenrohr (2) aus ineinandergesteckten, begrenzt gegeneinander verschiebbaren Modulen (21) aufgebaut ist, die an ihrem einen Ende mit einem biegsamen, das Modul im Aussenrohr (1) zentrierenden Flansch (215) und an ihrer Aussenseite mit einer wabenförmigen Isolierung (31) versehen sind, deren Steifigkeit in axialer Richtung wesentlich grösser als in radialer Richtung ist.

2. Rohrleitung nach Anspruch 1, dadurch gekennzeichnet, dass die wabenförmige Isolierung (31) nur einen Teil des Zwischenraumes zwischen Innen- (2) und Aussenrohr (1) ausfüllt und der übrige Zwischenraum in an sich bekannter Weise mit einem faserförmigen Isoliermaterial (32, 33) gefüllt ist.

3. Rohrleitung nach Anspruch 1, dadurch gekennzeichnet, dass zwischen den zu den einzelnen Modulen (21) gehörenden Teilstücken der Isolierung (31, 32, 33) ringförmige Trennscheiben (4) angeordnet sind.

4. Rohrleitung nach Anspruch 1, dadurch gekennzeichnet, dass an den Stössen der einzelnen Module (21) Druckentlastungsöffnungen (212) vorhanden sind.

5. Modul zum Aufbau des Innenrohres (2) einer Rohrleitung nach Anspruch 1, dadurch gekennzeichnet, dass es aus folgenden Teilen zusammengeformt ist:

a) einem längeren zylindrischen Teil (211) mit einem der gewünschten Nennweite entsprechenden Innendurchmesser, das an seinem einen Ende mit kammförmigen Ausnehmungen (212) versehen ist,

b) einem an dem anderen Ende anschliessenden, kürzeren zylindrischen Teil (214) mit einem um die doppelte Dicke der Wandung vergrösserten Innendurchmesser von einer Länge, die etwas geringer als die Tiefe der Ausnehmungen (212) ist,

c) einem mit einem abgerundeten Übergang hieran anschliessenden, im Längsschnitt etwa U-förmigen Flansch (215) mit einem Aussendurchmesser, der dem gewünschten Innendurchmesser des Aussenrohres (1) entspricht und an seinem freien Ende mit einer auf den Innendurchmesser des kürzeren zylindrischen Teils (214) führenden Abrundung versehen ist.

## Claims

1. A pipeline for hot fluids having an outer pressure-confining pipe and an inner, current-carrying pipe (1 and 2), and an insulating material (31, 32, 33) which fills the interspace between the two pipes, characterised in that the inner pipe (2) is made up of modules (21) which are fitted into one another and can be displaced relative to one another to a limited extent and which at their one end are provided with a flexible flange (215) which centres the module in the outer pipe (1), and on their outer surface are provided with a honeycomb insulation (31), the rigidity of which is substantially greater in the axial direction than in the radial direction.

2. A pipeline as claimed in Claim 1, characterised in that the honeycomb insulation (31) only fills a part of the interspace between the inner pipe (2) and the outer pipe (1); and the remaining interspace is filled with a fibrous insulating material (32, 33) in a manner known *per se*.

3. A pipeline as claimed in Claim 1, characterised in that annular separating plates (4) are arranged between the parts of the insulation (31, 32, 33) belonging to the individual modules (21).

4. A pipeline as claimed in Claim 1, characterised in that pressure relief openings (212) are arranged at the junctions between the individual modules (21).

5. A module for constructing the inner pipe (2) of a pipeline as claimed in Claim 1, characterised in that it is made up of the following parts:

(*a*) a long cylindrical part (211) which has an inner diameter corresponding to the required nominal width and which at its one end is provided with comb-shaped recesses (212);

(*b*) a shortes cylindrical part (214) which is connected to the other end and which has an inner diameter which is increased by twice the thickness of the wall and has a length which is somewhat less than the depth of the recesses (212);

(*c*) a flange (215) which is connected thereto by a rounded transition, is approximately U-shaped in longitudinal section and has an outer diameter which corresponds to the required inner diameter of the outer pipe (1), and at its free end is provided with a curvature which carries on to the inner diameter of the shorter cylindrical part (214).

## Revendications

1. Canalisation pour fluide chaud comprenant un tube extérieur (1) résistant à la pression et un tube intérieur (2) conduisant le courant, ainsi qu'un matériau isolant (31, 32, 33) remplissant l'intervalle entre les deux, caractérisée en ce que le tube intérieur (2) est constitué de modules (21) emboîtés les uns dans les autres, susceptibles de coulisser de manière limitée les uns par rapport aux autres et munis, à l'une de leurs extrémités, d'une bride (215) flexible centrant le module dans le tube extérieur (1) et, du côté extérieur, d'un isolant (31) en nid d'abeilles, dont la rigidité est sensiblement plus grande dans la direction axiale que dans la direction radiale.

2. Canalisation suivant la revendication 1, caractérisée en ce que l'isolant (31) en nid d'abeilles ne remplit qu'une partie de l'intervalle entre le tube intérieur (2) et le tube extérieur (1), et le reste de l'intervalle est rempli d'une manière en soi connue d'un matériau isolant (32, 33) en forme de fibre.

3. Canalisation suivant la revendication 1, caractérisée en ce qu'entre les pièces partielles de l'isolation (31, 32, 33) qui appartiennent aux modules (21) individuels sont disposés des disques de séparation (4) annulaires.

4. Canalisation suivant la revendication 1, caractérisée en ce qu'au niveau des joints entre les modules (21) individuels sont prévues des ouvertures (212) de décharge de la pression.

5. Module pour la construction du tube intérieur (2) d'une canalisation suivant la revendication 1, caractérisé en ce qu'il est formé des parties suivantes:

a) une partie cylindrique (211) assez longue ayant un diamètre intérieur correspondant au diamètre nominal souhaité et qui est muni à son extrémité d'évidements (212) en forme de peignes;

b) une partie cylindrique (214) plus courte se raccordant à l'autre extrémité et ayant un diamètre intérieur plus grand de deux fois l'épaisseur de la paroi et d'une longueur qui est un peu plus petite que la profondeur des évidements (212);

c) une bride (215) s'y raccordant par une zone de transition arrondie, de section longitudinale à peu près en forme de U et ayant un diamètre extérieur qui correspond au diamètre intérieur souhaité pour le tube extérieur (1), et qui est munie à son extrémité libre d'un arrondi menant au diamètre intérieur de la partie cylindrique plus courte (214).

FIG 1

FIG 2

FIG 3

**FIG 4**